# EUROPEAN PATENT APPLICATION

(11) **EP 1 626 259 A1**
(43) Date of publication of application: **15.02.2006**
(21) Application number: 04103883.7
(22) Date of filing: 12.08.2004
(51) Int. Cl.: G01L 1/24, G01N 21/80, G01K 11/32

(54) **Optical sensing of a physical parameter**

(71) Applicant: Agilent Technologies, Inc., Palo Alto, CA 94306 (US)
(72) Inventor: Thoma, Peter Agilent Technologies Deutschland Gmbh, 71034, Böblingen (DE); Nebendahl, Bernd Agilent Technologies Deutschland, 71034, Böblingen (DE); Beiter-Gougougiannis, Konstantin, 71034, Boeblingen (DE)
(74) Representative: Barth, Daniel Mathias

(57) **Abstract**

The present invention relates to an apparatus and to a method of optical sensing a value of a physical parameter by using an optical signal and an optical device (10a, 10b, 10c), the optical device (10a, 10b, 10c) having a known dependency of a wavelength shift of its optical signal induced response signal on a shift of the physical parameter, comprising the steps of: measuring a response signal of the optical device (10a, 10b, 10c) versus wavelength at a value of the physical parameter which value is to be determined, calculating a cross correlation function of a reference response signal with the response signal to evaluate a wavelength shift of the response signal with respect to the reference response signal, wherein the reference response signal represents a response of the optical device (10a, 10b, 10c) versus wavelength at a known value of the physical parameter and using the evaluated wavelength shift and the known dependency of a wavelength shift of the response signal of the optical device (10a, 10b, 10c) on a shift of the physical parameter to determine the value of the physical parameter.

## Description

### BACKGROUND OF THE INVENTION

The present invention relates to optical sensing of a physical parameter of an optical device.

Optical sensing can be used for example for sensing the temperature or another physical parameter of an ambience in which the optical sensing of the physical parameter takes place.

Optical sensing means that a change of the physical parameter of interest changes the optical properties of an optical device or sensor used for the optical sensing. Therefore, measuring such a change of the optical properties of the optical device gives information about the change of the physical parameter of interest in the ambience of the optical device.

### SUMMARY OF THE INVENTION

It is an object of the invention to provide improved optical sensing of a physical parameter of interest.

The object is solved by the independent claims.

In the prior art optical sensing of a physical parameter of an ambience is performed by measuring a wavelength shift of a response signal due to a change of the physical parameter. The response signal is received from an optical device used for the optical sensing and which optical device transmits or reflects a measurement signal launched by a signal generator.

A transmission or reflection property of such an optical device and hence the wavelength dependency of the response signal is dependent on the physical parameter of interest in the ambience of the optical device. Consequently, such an optical sensor, e.g. an optical fiber sensor, enables the optical sensing of the physical parameter by measuring a change in the wavelength dependence of the response signal due to a change of the physical parameter.

The invention comprises the perception that measuring the wavelength shift of the response signal with respect to the reference response signal requires exact determination of a characteristic wavelength of these signals. However, normally such signals do not comprise a single peak at a single wavelength but show a more or less noisy spectral distribution. Accordingly, determining a wavelength shift between characteristic wavelengths of response signals e.g. the maximum value or the center of gravity of such spectral responses is difficult and might bear a lot of uncertainty.

A further problem of the determination of a maximum value is that many measurement points have to be acquired over a wide range to obtain at least some of the measurement points near the maximum to get an accurate result for the location of the maximum and finally for the wavelength at that maximum of the response signals.

An evaluation according to the present invention is only weakly dependent on the number of measurement points used for the evaluation of the wavelength shift.

Additionally, the repeatability of an evaluation according to the present invention is also higher than in the methods of the prior art because of the independency of the repeatability from the number of measurement points.

Moreover, an evaluation according to the present invention is more robust against added noise, e.g. caused by amplifiers or detectors. This is because the influence of added noise in an evaluation of the present invention is only weakly dependent on the number of measurement points.

E.g. within an optical fiber an optical sensor can preferably be used as a remote sensing device to detect the value of a physical parameter also in a remote distance from a signal generator and a measurement unit.

Optical sensing according to the present invention can be used for example for sensing the temperature, the pressure, the humidity, the pH value or other physical parameters of an ambience in which the optical sensing of the physical parameter takes place.

According to a preferred embodiment of the present invention it is used a Bragg grating as an optical device or sensor. The Bragg grating is preferably placed within an optical fiber. The transmission or reflection properties of the Bragg grating change with a change of the physical parameter. Then, the response of the Bragg grating can be detected in transmission and/or in reflection to detect a change of the physical parameter.

An embodiment of the present invention uses a dye as a sensor to detect a change of the pH of the ambience of the sensor by detecting a change of the dye.

Other preferred embodiments are shown by the dependent claims.

The invention can be partly embodied or supported by one or more suitable software programs, which can be stored on or otherwise provided by any kind of data carrier, and which might be executed in or by any suitable data processing unit. Software programs or routines are preferably applied to the realization of the inventive method.

### BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principles of the present invention. Features that are substantially or functionally equal or similar will be referred to with the same reference sign(s).
- Fig. 1: shows a schematic illustration of a first embodiment of the present invention;
- Fig. 2: shows a schematic illustration of a second embodiment of the present invention; and
- Fig. 3: shows a flow chart with graphs depicting the shift of the wavelength due to a change of a physical parameter in the ambience of a sensor according to an embodiment of the present invention.

### DETAILED DESCRIPTION OF PREFERRED EMBODIMENTS OF THE PRESENT INVENTION

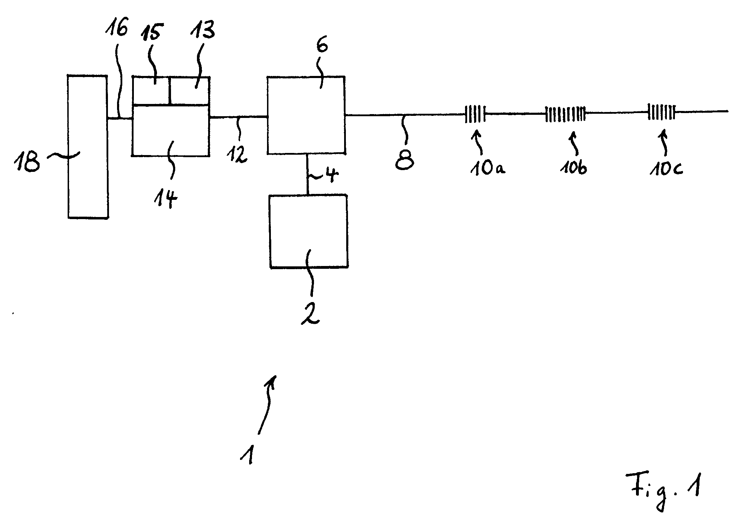

Referring now in greater detail to the drawing, Fig. 1 shows a schematic illustration of an apparatus 1 for optical sensing in reflection a value of a physical parameter of an ambience by using an optical signal according to a preferred first embodiment of the present invention.

Apparatus 1 comprises a signal generator 2 for providing an optical signal to an optical fiber 4. The optical fiber 4 connects the signal generator 2 with an optical coupler 6. The optical coupler 6 is connected to an optical fiber 8. The optical fiber 8 comprises optical devices 10a, 10b and 10c. The optical devices 10a, 10b and 10c are integrated in the optical fiber 8 and serve as optical sensors for performing the optical sensing in reflection of a physical parameter of the ambience of the optical sensors 10a, 10b and 10c, respectively. The physical parameter of the ambience of optical sensors 10a, 10b and 10c, respectively, can be the same or each or some of the optical sensors 10a, 10b and 10c can detect different physical parameters. In the present embodiment 1 of Fig. 1 each optical sensor 10a, 10b and 10c comprises a reflective Bragg grating.

In a not shown alternative embodiment of the present invention at least one of the sensors use a dye to detect a change of the pH of the ambience of the sensor by detecting a change of the dye in transmission or reflection.

Physical parameters can be e.g. the temperature, the pressure, the humidity, the pH value or any other physical or chemical parameter.

By using an optical fiber 8 comprising the optical sensors 10a, 10b and 10c it is possible to provide a remote sensing device to detect the value of the desired physical parameter in a remote distance from the signal generator 2.

Apparatus 1 further comprises an optical fiber 12, which connects the optical coupler 6 with a measurement unit 14. The measurement unit 14 comprises a central processing unit (CPU) 13 for performing any necessary calculation processes and comprises a memory 15 for storing information. CPU 13 and memory 15 are connected with each other and work together in a usual manner. The measurement unit 14 serves for measuring an optical signal induced response signal of the optical devices 10a, 10b and 10c. Measurement unit 14 measures the response signal of the optical devices 10a, 10b and 10c versus wavelength. In the present embodiment this is done in two steps; firstly in a calibration step and secondly in a measurement step. In the first step there is generated a reference response signal, and in the second step there is generated a measurement response signal. The steps are further described below when how embodiment 1 works to determine the physical parameter.

In the embodiment 1 Fig. 1 optical devices 10a, 10b and 10c do reflect the optical signal generated by the signal generator 2. However, in alternative embodiments it is also possible to provide an optical fiber 8, which comprises optical sensors which transmit the optical signal of signal generator 2. An example of such an embodiment is described below.

Connected with the measurement unit 14 by another optical fiber 16 is a evaluation unit 18 for calculating a cross correlation function of the reference response signal with the measurement response signal to evaluate a wavelength shift of the measurement response signal with respect to the reference response signal, and for determining the value of the physical parameter by using the evaluated wavelength shift and the known dependency of a wavelength shift of the response signal of the optical device 10a, 10b and 10c on a shift of the physical parameter.

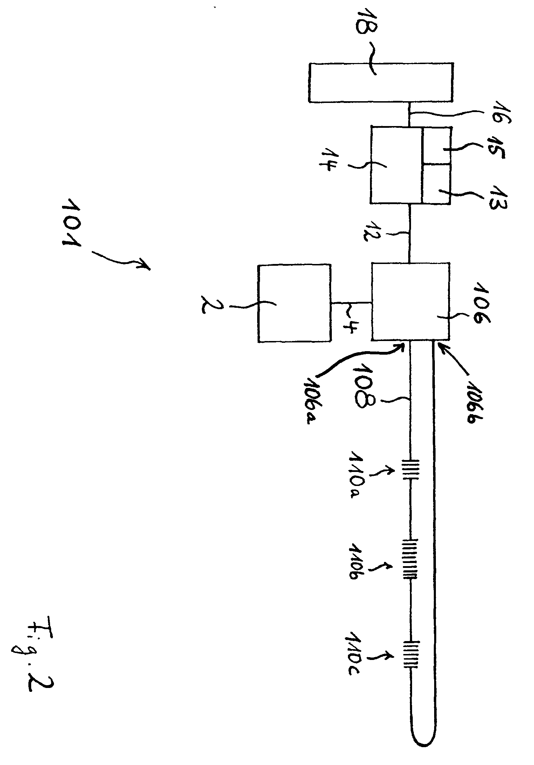

An alternative second embodiment of the present invention, which transmits the optical signal of signal generator 2 as mentioned above, is shown in Fig. 2. Fig. 2 shows a schematic illustration of an apparatus 101 for optical sensing in transmission a value of a physical parameter of an ambience by using an optical signal. Differing from apparatus 1 of Fig. 1 apparatus 101 of Fig. 2 comprises a different coupler 106 which as two connections 106a and 106b with an optical fiber 108. Connection 106a serves to guide an optical signal coming from signal generator 2 via the coupler 106 into the optical fiber 108. Connection 106b serves to guide an optical signal coming back from the optical fiber 108 into the coupler 106. The optical fiber 108 comprises optical devices 110a, 110b and 110c. The optical devices 110a, 110b and 110c are integrated in the optical fiber 108 and serve as optical sensors for performing the optical sensing in transmission of a physical parameter of the ambience of the optical sensors 110a, 110b and 110c, respectively. The physical parameter of the ambience of optical sensors 110a, 110b and 110c, respectively, can be the same or each or some of the optical sensors 110a, 110b and 110c can detect different physical parameters. In embodiment 2 of Fig. 2 each optical sensor 110a, 110b and 110c comprises a transmittive Bragg grating.

All other parts of apparatus 101 of Fig. 2 are substantially or functionally equal or similar to the parts of apparatus 1 of Fig. 1.

The whole process, in particular the calculation of the cross correlation function and the determination of the value of the physical parameter with both embodiments 1 and 101 of Fig. 1 and 2, respectively, work as follows:

An optical signal is generated by the signal generator 2. The optical signal is transmitted by the optical fiber 4 to the optical coupler 6 or 106. The optical coupler 6 couples the optical signal into the optical fiber 8 or 108. Optical sensors 10a, 10b and 10c of the optical fiber 8 or optical sensors 110a, 110b and 110c of the optical fiber 108 have a known dependency of a wavelength shift of their optical signal induced response signals on a shift of the physical parameter to be measured.

To perform the measurement the signal generator 2 sweeps the wavelength of the optical signal at a known value of the physical parameter to be measured by the optical devices 10a, 10b and 10c or 110a, 110b and 110c, for calibration purposes. Simultaneously, the measurement unit 14 measures a corresponding reference response signal of the optical devices 10a, 10b and 10c or 110a, 110b and 110c.

Having done this calibration step the measured reference response signal versus wavelength is stored in the evaluation unit 18.

To measure a value of the physical parameter which value is to be determined there is performed another sweep of the wavelength by the signal generator 2 and another measurement of the corresponding response signal of the optical devices 10a, 10b and 10c or 110a, 110b and 110c by the measurement unit 14. The result is also provided to the evaluation unit 18.

The evaluation unit 18 then uses the stored reference response signal and the stored measurement response signal for calculating a cross correlation function of the reference response signal with the measurement response signal to evaluate a wavelength shift of the measurement response signal with respect to the reference response signal.

If R(λ) is the reference response signal and M(λ) is the measurement response signal, then the cross correlation function CCF(Δλ) is the integral of the product (R(λ) M(λ+Δλ)) from λstart to λstop. The cross correlation function CCF(Δλ) can be calculated batch-bulk, e.g. from λstart1 to λstop1 and then form λstop1 to λstop2. The evaluation unit 18 is evaluating the wavelength shift Δλ by determining the location of the peak of the cross correlation function CCF(Δλ), the location of the peak indicating the value of the wavelength shift Δλ.

Subsequently, the evaluation unit 18 determines the value of the physical parameter by using each the evaluated wavelength shift Δλ and the known dependency of a wavelength shift Δλ of the response signal of the optical devices 10a, 10b and 10c or 110a, 110b and 110c versus a shift of the physical parameter.

In embodiment 1 of Fig. 1 the optical sensing of a value of a physical parameter is performed at different spatial locations along the optical fiber 8 by way of example using three optical devices 10a, 10b and 10c. In embodiment 101 of Fig. 2 the optical sensing of a value of a physical parameter is performed at different spatial locations along the optical fiber 108 by using three optical devices 110a, 110b and 110c.

Instead of detecting only one response signal when using one optical device, there are three subsequent responses. For each response, a correlation measurement is performed. If the same physical parameter is to be determined and if the optical devices are similar, the correlation is each performed with the same reference response signal. It is also possible to detect a relative shift of the physical parameter at two measurement points by performing a cross correlation between two response signals of the corresponding optical devices.

To allocate each measurement response signal to a certain location the evaluation unit 18 performs a time resolution of the measured response signals when detecting the response signals of the three optical devices 10a, 10b and 10c or 110a, 110b and 110c and transforms the time differences into location differences on the base of the light speed within the optical fiber.

The measurement unit 14 can comprise a broadband optical detector when using a narrowband optical signal with variable wavelength provided by the signal generator 2.

In an alternative embodiment, the measurement unit 14 can comprise a narrowband optical detector with variable detection wavelength when using a broadband optical signal provided by the signal generator 2. Instead of sweeping the signal generator 2, the detector then scans the response within the interested wavelength range.

Further alternatively, the measurement unit 14 can comprise a narrowband optical detector when using a narrowband optical signal provided by the signal generator 2, when both bands having substantially the same wavelength.

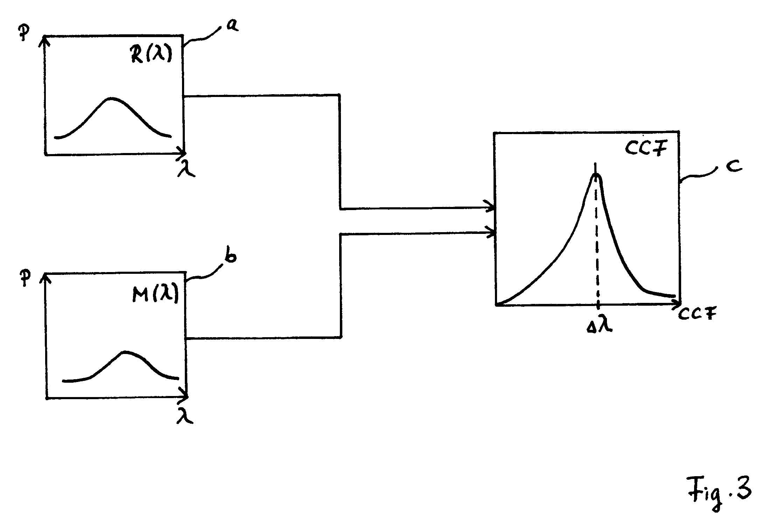

Fig. 3 shows a flow chart with graphs depicting the shift of the wavelength due to a change of a physical parameter in the ambience of a sensor according to an embodiment of the present invention.

Box a shows a graph depicting the resulting reference response signal R(λ) of a measurement of the optical power of a reference response signal of a sensor versus wavelength λ at a known value of the physical parameter for calibration purposes.

Box b shows a graph depicting the resulting response signal M(λ) of a measurement of the optical power of a response signal of a sensor versus wavelength λ at a value of the physical parameter which value is to be determined.

Box c shows a graph depicting the cross correlation function CCF(Δλ) of the reference response signal R(λ) and the response signal M(λ). As described above the wavelength shift Δλ is evaluated by the evaluation unit 18 by determining the location of the peak of the cross correlation function CCF(Δλ) as the integral of the product (R(λ) M(λ+Δλ)) from a λstart to a λstop.

## Claims

**1.** A method of optical sensing a value of a physical parameter of an optical device (10a, 10b, 10c), wherein a response signal is compared to a reference response signal, comprising the steps of:
emitting an optical signal into an optical device (10a, 10b, 10c), at a value of the physical parameter, which is to be determined,
detecting a response signal of the optical device (10a, 10b, 10c) versus the wavelength,
calculating a cross correlation function of a reference response signal with the response signal to evaluate a wavelength shift of the response signal with respect to the reference response signal, wherein the reference response signal represents a response of the optical device (10a, 10b, 10c) versus wavelength at a known value of the physical parameter, and
determining the value of the physical parameter on the base of the evaluated wavelength shift and the known dependency of a wavelength shift of the response signal with respect to the shift of the physical parameter.

**2.** The method of claim 1, wherein an optical signal is emitted into an optical device (10a, 10b, 10c), at a known value of the physical parameter, wherein a corresponding response signal versus the wavelength is detected and stored as reference response signal.

**3.** The method of claim 1 or 2, wherein the optical signal is a broadband signal and wherein the detecting of the response signal versus wavelength is performed by varying a detection wavelength.

**4.** The method of claim 1 or any one of the above claims, wherein the optical signal is a narrowband optical signal and wherein the detecting of the response signal versus wavelength is performed by varying the wavelength of the optical signal.

**5.** The method of claim 1 or any one of the above claims, wherein the optical signal is a narrowband optical signal, wherein the detecting of the response signal is a narrowband measuring an wherein both bands are synchronously varied.

**6.** The method of claim 1 or any one of the above claims, further comprising the steps of:
evaluating the wavelength shift by determining the location of the peak of the cross correlation function, the location of the peak indicating the value of the wavelength shift.

**7.** The method of claim 1 or any one of the above claims, further comprising the steps of:
performing optical sensing of a value of a physical parameter at different spatial locations by using two or more optical devices (10a, 10b, 10c).

**8.** The method of claim 1 or any one of the above claims, further comprising the steps of:
allocating each response signal to a certain location by performing a time resolution of the measured response signals when measuring more than one response signal.

**9.** The method of claim 1 or any one of the above claims, further comprising the steps of:
measuring a response signal transmitted and/or reflected by the at least one optical device (10a, 10b, 10c).

**10.** A software program or product, preferably stored on a data carrier, for executing the method of one of the claims 1 to 9 when run on a data processing system such as a computer.

**11.** An apparatus (1) adapted for optical sensing a value of a physical parameter by detecting a response signal from an optical device (10a, 10b, 10c) having a known dependency of a wavelength shift of its optical signal induced response signal on a shift of the physical parameter, comprising:
a measurement unit (14) adapted for measuring a response signal of the optical device (10a, 10b, 10c) versus wavelength at a value of the physical parameter which value is to be determined,
an evaluation unit (18) adapted for calculating a cross correlation function of a reference response signal with the response signal to evaluate a wavelength shift of the response signal with respect to the reference response signal, and for determining the value of the physical parameter on the base of the evaluated wavelength shift and a known dependency of a wavelength shift of the response signal of the optical device (10a, 10b, 10c) versus a shift of the physical parameter.

**11.** The apparatus of claim 11 or any one of the above claims,
whereby the optical device (10a, 10b, 10c) is integrated in an optical fiber (8) connected to the measurement unit.

**12.** The apparatus of claim 11 or any one of the above claims,
whereby the optical device (10a, 10b, 10c) comprises a Bragg grating.

**13.** The apparatus of claim 11 or any one of the above claims,
whereby the device (10a, 10b, 10c) comprises a dye.

**14.** The apparatus of claim 11 or any one of the above claims, wherein at least one further optical device (1 0a, 10b, 10c) is provided, wherein the measurement unit (14) is adapted for measuring at least a corresponding further response signal of the optical device (10a, 10b, 10c) versus wavelength at a further value of the physical parameter a wherein the evaluation unit (18) is adapted for calculating a cross correlation function of the response signal with at least one of: the reference response signal, a further reference response signal and the response signal to evaluate a wavelength shift.
